# EUROPEAN PATENT APPLICATION

(11) **EP 4 618 190 A1**
(43) Date of publication of application: **17.09.2025**
(21) Application number: 24898933.7
(22) Date of filing: 20.11.2024
(51) Int. Cl.: H01M 4/38

(54) **NEGATIVE ELECTRODE MATERIAL AND BATTERY**

(30) Priority: 29.12.2023 CN 202311842097; 27.03.2024 CN 202410365578
(71) Applicant: BTR NEW MATERIAL GROUP CO., LTD., Shenzhen, Guangdong 518106 (CN)
(72) Inventor: CHE, Zongzhou, Shenzhen, Guangdong 518106 (CN); HE, Peng, Shenzhen, Guangdong 518106 (CN); REN, Jianguo, Shenzhen, Guangdong 518106 (CN); HE, Xueqin, Shenzhen, Guangdong 518106 (CN)
(74) Representative: advotec.
(86) International application number: PCT/CN2024/133191
(87) International publication number: WO 2025/139476

(57) **Abstract**

An anode material includes a carbon material and a silicon material, and the silicon material is located inside the carbon material and/or between the carbon material; a total volume of the carbon material is V_{C}, and a total volume of the silicon material is V_{Si}, wherein 0.9 ≤ V_{C}/V_{Si}≤2.3; a SEM section of a particle of the anode material is divided into a plurality of unit regions with an area of A × B, wherein A × B = 10⁴nm², an average distance between adjacent particles of the silicon material in any unit area is d nm, and 3 ≤ d ≤ 50. According to the anode material provided by the present disclosure, the dispersion uniformity of the silicon material can be improved, the volume expansion of the anode material can be effectively inhibited, and the battery cycle performance is improved.

## Description

The present application claims priority to Chinese Patent Application No. 202311842097.6, entitled "ANODE MATERIAL, PREPARATION METHOD THEREOF, AND BATTERY" filed on December 29, 2023, and claims priority to Chinese Patent Application No. 202410365578.0, entitled "ANODE MATERIAL, PREPARATION METHOD THEREOF, AND BATTERY" filed on March 27, 2024, the entirety of which are incorporated herein by reference.

### TECHNICAL FIELD

The present disclosure relates to a field of anode materials, and in particular, to an anode material and a battery.

### BACKGROUND

Lithium-ion batteries have the advantages such as high energy density, long cycle life, low environmental pollution, and no memory effect, and thus are widely used in electric vehicles and consumer electronics. In recent years, the rapid development of electric vehicles has increased the demand for the lithium ion batteries with higher energy densities, which prompts researchers to search for battery materials with higher energy density and better cycle performance. The anode materials are the core of the batteries, and determine the working efficiency of the batteries. At present, the commercial anode material is graphite, the capacity of which is already close to the theoretical upper limit, leaving limited room for further enhancement. Therefore, there is an urgent need to develop a new generation of the anode material with high energy density. Silicon-based anode material materials are generally considered as a next-generation anode material for batteries, and has advantages such as high capacity, abundant resources, and relative safety.

A silicon anode is generally considered as a next-generation battery anode material, and has advantages such as high capacity, abundant sources, and relative safety. However, silicon anodes has significant volume expansion during cycle, which leads to material pulverization, crushing, and rapid cycle degradation. Generally, a silicon-carbon composite method is used to inhibit the volume expansion of the silicon, but the silicon material in the current composite method is prone to agglomeration, resulting in excessive local expansion stress of the anode material, which affect the cycle stability of the anode material.

### SUMMARY

The present disclosure provides an anode material and a battery, which can improve the dispersion uniformity of the silicon material, can effectively inhibit the volume expansion of the anode material, and can improve the cycle performance of the battery.

In a first aspect, the present disclosure provides an anode material, the anode material includes a carbon material and a silicon material, wherein the silicon material is located inside the carbon material and/or between the carbon material; a total volume of the carbon material is V_{C}, and a total volume of the silicon material is V_{Si}, wherein 0.9 ≤ V_{C}N_{Si} ≤ 2.3; and
a SEM section of a particle of the anode material is divided into a plurality of unit regions with an area of A × B, wherein A × B = 10⁴ nm², and an average distance between adjacent silicon materials in any unit region is d nm, 3 ≤ d ≤ 50.

In a second aspect, the present disclosure provides an anode material, the anode material includes a carbon material and a silicon material, wherein the silicon material is located inside the carbon material and/or between the carbon material; a total volume of the carbon material is V_{C}, and a total volume of the silicon material is V_{Si}, wherein 0.9 ≤ V_{C}/V_{Si} ≤ 2.3; and
a SEM section of a particle of the anode material is divided into a plurality of unit regions with an area of A × B, wherein A × B = 10⁴ nm², the number of the silicon material in any unit region is N, and 1 ≤ N ≤ 30.

In a third aspect, the present disclosure provides a battery, the battery includes the anode material.

The technical solution of the present disclosure has at least the following beneficial effects.

According to the anode material provided by the present disclosure, the anode material includes a carbon material and a silicon material, and the silicon material is located inside the carbon material and/or between the carbon material; the average distance between adjacent silicon materials in any unit area is d nm, 3 ≤ d ≤ 50, the silicon material can realize uniform dispersion in the particles of the carbon material and between the particles of the carbon material, the excessive local stress of the anode material caused by silicon material agglomeration can be reduced, and the particle crushing or pulverization of the anode material is reduced. In addition, the volume ratio of the carbon material to the silicon material is controlled within the range of 0.9 to 2.3, the conductivity of the anode material can be improved, the volume expansion effect of the silicon material can be effectively relieved in the cycle process, the structural stability of the anode material particles is maintained, thereby improving the cycle performance of the anode material.

According to the anode material provided by the present disclosure, the anode material includes particles of the carbon material and a silicon material, and the silicon material is located inside the carbon material and/or between the carbon material; the number of the silicon material in any unit area is N, 1 ≤ N ≤ 30, the silicon material can be uniformly dispersed in the carbon materials particles and between the particles of the carbon material, the excessive local stress of the anode material caused by silicon material agglomeration can be reduced, and the particle crushing or pulverization of the anode material is reduced. In addition, the volume ratio of the carbon material to the silicon material is controlled within the range of 0.9 to 2.3, the conductivity of the anode material can be improved, the volume expansion effect of the silicon material can be effectively relieved in the cycle process, the structural stability of the anode material particles is maintained, thereby improving the cycle performance of the anode material.

### BRIEF DESCRIPTION OF DRAWINGS

FIG. 1 is a process flow chart of a preparation method of an anode material provided by the present disclosure;
FIG. 2 is an electron mirror image of an anode material prepared in Example 1 of the present disclosure; and
FIG. 3 is an XRD (X-ray diffraction) diagram of the anode material prepared in Example 1 of the present disclosure.

### DESCRIPTION OF EMBODIMENTS

In order to better illustrate the present disclosure and facilitate the understanding of technical solutions of the present disclosure, the present disclosure will be further described in detail below. However, the following embodiments are only simple examples of the present disclosure, and do not represent or limit the scope of protection of the present disclosure, which shall be defined by the claims.

In a first aspect, the present disclosure provides an anode material, the anode material includes a carbon material and a silicon material, wherein the silicon material is located inside the carbon material and/or between the carbon material; a total volume of the carbon material is V_{C}, and a total volume of the silicon material is V_{Si}, wherein 0.9 ≤ V_{C}/N_{Si} ≤ 2.3; and
a SEM section of a particle of the anode material is divided into a plurality of unit regions with an area of A × B, wherein A × B = 10⁴ nm², and the average distance between adjacent particles of the silicon material in any unit region is d nm, 3 ≤ d ≤ 50. Specifically, the distance between adjacent particles of the silicon material is a distance between centers of adjacent particles of the silicon material. Specifically, the SEM section of a particle of the anode material is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm.

In some embodiments, the spacing between adjacent particles of the silicon material in at least one unit region is d₀ nm, 3 ≤ d₀ ≤ 50. It can be understood that when the particles of the silicon material are uniformly distributed, the spacing d₀ between any two adjacent particles of the silicon material is the same, and at this time, the average spacing d between adjacent particles of the silicon material is the spacing d₀.

According to the anode material provided by the present disclosure, the anode material includes a carbon material and a silicon material, and the silicon material is located inside the carbon material and/or between the carbon material; the average distance between adjacent particles of the silicon material in any unit area is d nm, 3 ≤ d ≤ 50, the particles of the silicon material can realize uniform dispersion in the carbon material and/or between the carbon material, the excessive local stress of the anode material caused by silicon material agglomeration can be reduced, and the particle crushing or pulverization of the anode material is reduced. In addition, the volume ratio of the carbon material to the silicon material is controlled within the range of 0.9 to 2.3, the conductivity of the anode material can be improved, the volume expansion effect of the silicon material can be effectively relieved in the cycle process, the structural stability of the anode material particles is maintained, thereby improving the cycle performance of the anode material.

In some embodiments, the SEM section of a particle of the anode material is divided into a plurality of unit regions with an area of A × B, wherein A × B = 10⁴ nm², and the number of particles of the silicon material in any unit region is N, 1 ≤ N ≤ 30. Specifically, the SEM section of the anode material particle particles is divided into a plurality of unit regions with an area of A × B, wherein A × B = 100 nm * 100 nm = 10⁴ nm², 5 unit regions are randomly selected, and the number N of particles of the silicon material in each selected unit region is counted.

In the above solution, the anode material includes a carbon material and a silicon material, and the silicon material is located inside the carbon material and/or between the carbon material; the number of the particles of the silicon material in any unit area is N, 1 ≤ N ≤ 30, the silicon material can be uniformly dispersed in the carbon material and between the carbon material, the excessive local stress of the anode material caused by silicon material agglomeration can be reduced, and the particle crushing or pulverization of the anode material is reduced. In addition, the volume ratio of the carbon material to the silicon material is controlled within the range of 0.9 to 2.3, the conductivity of the anode material can be improved, the volume expansion effect of the silicon material can be effectively relieved in the cycle process, the structural stability of the anode material particles is maintained, thereby improving the cycle performance of the anode material.

In some embodiments, the silicon material includes at least one of crystalline silicon, amorphous silicon, and a silicon alloy.

The silicon alloy may be a silicon-lithium alloy, a silicon-magnesium alloy, or the like, and in some cases, the silicon material includes amorphous silicon and a silicon alloy. Preferably, the silicon material includes amorphous silicon, and the amorphous silicon expands isotropically in the lithium intercalation process, which can reduce collapse of the pore structure in the anode material, inhibit rapid attenuation of the specific capacity of the anode material, and improve the lithium intercalation cycle performance of the anode material.

In some embodiments, the silicon material has a mean particle size ranging from 1 nm to 50 nm, which specifically may be 1 nm, 2 nm, 5 nm, 8 nm, 10 nm, 15 nm, 20 nm, 25 nm, 30 nm, 35 nm, 40 nm, 50 nm, or the like, which is not limited herein. The silicon material with suitable size can improve the distribution uniformity of the silicon material and the carbon matrix, reduce the agglomeration phenomenon of the silicon material, and improve the cycle performance of the anode material. Preferably, the silicon particles have a mean particle size ranging from 1 nm to 10 nm. More preferably, the silicon particles have a mean particle size ranging from 1 nm to 5 nm.

In some embodiments, a mass percentage of silicon element in the silicon material is ≥ 99%. The mass percentage of the silicon element in the silicon material is within the above range, which is beneficial to improving the purity of the silicon material and reducing impurities.

In some embodiments, the silicon material includes silicon particles. The morphology of the silicon particles includes at least one of dots, spheres, ellipsoids and sheets, and the morphology of the silicon particles may be selected according to actual needs, which is not limited herein.

In some embodiments, the silicon material includes silicon particles and a silicon oxide layer on surfaces of the silicon particles. The silicon oxide layer includes silicon oxide, and the general formula of the silicon oxide is SiOₓ, wherein 0.5 ≤ x < 2. Specifically, the SiOₓ may be SiO_{0.5}, SiO_{0.7}, SiO_{0.9}, SiO, SiO_{1.2}, SiO_{1.5}, SiO_{1.8}, SiO_{1.9}, or the like, which is not limited herein.

In some embodiments, the silicon material includes silicon particles and a silicon oxide layer on surfaces of the silicon particles, and oxygen element in the silicon material has a mass percentage ranging from 1% to 18% based on a mass of the silicon material being 100%. Specifically, the mass percentage of oxygen atoms in the silicon material may be 1%, 2%, 3%, 4%, 5%, 6%, 7%, 8%, 9%, 10%, 11%, 12%, 13%, 14%, 15%, 16%, 17% or 18%, or the like, which is not limited herein. The mass percentage of the oxygen element in the silicon material is controlled within the above range, which is beneficial to forming a stable silicon oxide layer on the surface of the silicon particles, which can reduce the direct contact between the silicon particles and the electrolyte, thereby reducing the side reaction between the silicon material and the electrolyte, and improving the cycle stability of the anode material; it can also ensure that the silicon material has stable activity, and improve the specific capacity of the anode material.

In some embodiments, the carbon material includes at least one of amorphous carbon, crystalline carbon, graphite fibers, carbon nanotubes, carbon fibers, and mesocarbon microspheres. It can be understood that, the carbon material can reduce the volume expansion effect of the anode material to a certain extent, while enhancing the conductivity of the anode material; the carbon material can further reduce the direct contact between the silicon material and the electrolyte, inhibit the excessive growth of a SEI membrane on the surface of the anode material, stabilize the interface of the anode material, and improve the coulombic efficiency of the anode material.

In some embodiments, the carbon material has pores and at least part of the silicon material is located within the pores of the carbon material. It can be understood that the pore structure of the carbon material can provide space for the volume expansion of the silicon material, effectively alleviate the volume expansion effect of the silicon material, and improve the cycle performance of the anode material.

In some embodiments, the anode material has a median particle size ranging from 5 µm to 15 µm; which specifically may be 5 µm, 6 µm, 7 µm, 8 µm, 9 µm, 10 µm, 12 µm, 13 µm, 14 µm or 15 µm, or the like, and may also be other values within the above ranges, which are not limited herein. It can be understood that, the median particle size of the anode material is controlled within the above range, which is conducive to improving the cycle performance of the anode material.

In some embodiments, the anode material has a specific surface area ranging from 1m²/g to 20m²/g; which specifically may be 1 m²/g, 1.5 m²/g, 2 m²/g, 3 m²/g, 5 m²/g, 8 m²/g, 10 m²/g, 15 m²/g or 20 m²/g, or the like, and may also be other values within the above ranges, which are not limited herein. The specific surface area of the anode material is controlled within the above range, which is conducive to improving the first efficiency and cycle performance of the lithium battery made of the anode material.

In some embodiments, the carbon element in the anode material has a mass percentage ranging from 30% to 75%; which specifically may be 30%, 35%, 40%, 45%, 50%, 55%, 60%, 65%, 70% or 75%, or the like, which is not limited herein.

In some embodiments, the silicon element in the anode material has a mass percentage ranging from 25% to 65%; which specifically may be 25%, 30%, 35%, 40%, 45%, 50%, 55%, 60% or 65%, or the like, which is not limited herein.

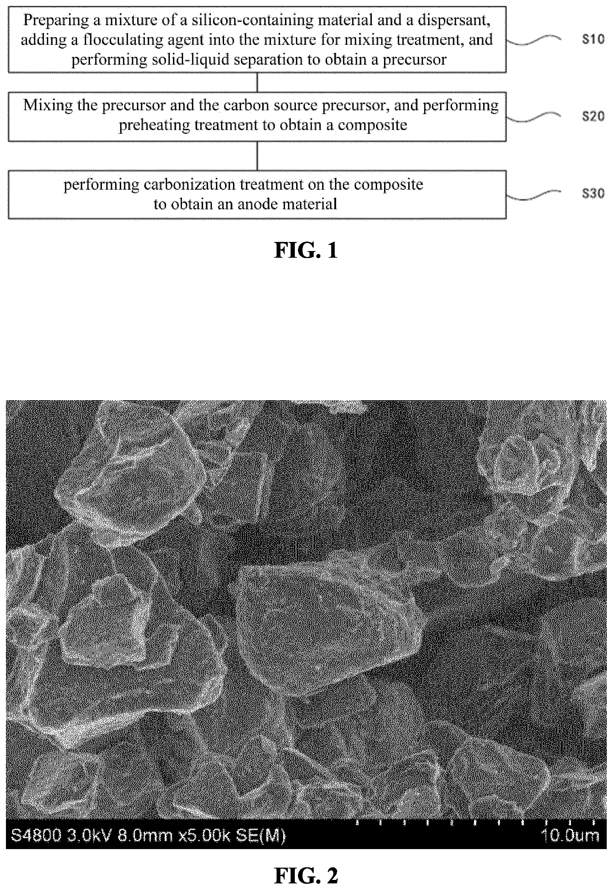

In a second aspect, an embodiment of the present disclosure provides a preparation method of an anode material, as shown in FIG.1. The method includes the following steps:
Step S10, preparing a mixture of a silicon-containing material and a dispersant, adding a flocculating agent into the mixture for mixing treatment, and performing solid-liquid separation to obtain a precursor;
Step S20, mixing the precursor and the carbon source precursor, and performing preheating treatment to obtain a composite; and
Step S30, performing carbonization treatment on the composite to obtain the anode material.

According to the preparation method of the anode material provided by the present disclosure, firstly, the silicon material is dispersed in the mixture containing the dispersant, so that the silicon material can be fully dispersed; then, the flocculating agent is added to enable the silicon material and the dispersant to be synchronously flocculated and precipitated, and the composite is obtained after solid-liquid separation, and due to the fact that the dispersant exists on the surface of the silicon material, agglomeration of the silicon material can be reduced. A precursor is mixed with a carbon source to enable the carbon source to replace the dispersant on the surface of the silicon material through melting and permeation in a primary heat treatment process, and it enables the silicon material to maintain the dispersed state in the carbon source precursor; and finally, preheating treatment and carbonization treatment are performed to obtain the anode material, the silicon material in the anode material can be dispersed in the carbon material and between the carbon material, the conductivity of the anode material can be improved, the volume expansion effect of the silicon material can be effectively relieved in the cycling process, the structural stability of the anode material particles is maintained, thereby improving the cycle performance of the anode material.

The following describes in detail the technical solutions of the present disclosure.

Step S10, a mixture of a silicon-containing material and a dispersant were prepared, a flocculating agent was added into the mixture for mixing treatment, and solid-liquid separation is performed to obtain a precursor.

In some embodiments, the silicon material includes at least one of crystalline silicon, amorphous silicon, and a silicon alloy.

The silicon alloy may be a silicon-lithium alloy, a silicon-magnesium alloy, or the like, and in some cases, the silicon material includes amorphous silicon and a silicon alloy. Preferably, the silicon material includes amorphous silicon, and the amorphous silicon expands isotropically in the lithium intercalation process, which can reduce collapse of the pore structure, inhibit rapid attenuation of the specific capacity, and improve the lithium intercalation cycle performance.

In some embodiments, the silicon material has a mean particle size ranging from 1 nm to 50 nm, which specifically may be 1 nm, 2 nm, 5 nm, 8 nm, 10 nm, 15 nm, 20 nm, 25 nm, 30 nm, 35 nm, 40 nm, 50 nm, or the like, which is not limited herein.

In some embodiments, the dispersant includes at least one of stearic acid, sodium stearate, zinc stearate, magnesium stearate, calcium stearate, polyvinylpyrrolidone, carboxymethyl cellulose, and polyacrylic acid.

In some embodiments, the mass ratio of the silicon material to the dispersant is 100: (20 to 100), which specifically may be 100: 20, 100: 30, 100: 40, 100: 50, 100: 60, 100: 70, 100: 80, 100: 90 or 100: 100, or the like, and may also be other values within the above ranges, which are not limited herein. It can be understood that an appropriate dispersant can improve the dispersion degree of the silicon material in the mixture and reduce agglomeration of the silicon material, thereby improving the dispersion degree of the silicon material in the precursor.

In some embodiments, the mixture further includes a solvent, and the solvent includes at least one of water, methanol, ethanol, ethylene glycol, propanol, isopropanol, glycerol, n-butanol, isobutanol, pentanol, and ethyl acetate.

In some embodiments, the mixing treatment is performed under stirring.

In some embodiments, the mixing time is in a range of 0.5h to 3h, which specifically may be 0.5h, 1h, 1.5h, 2h, 2.5h or 3h, or the like, and may also be other values within the above range, which is not limited herein.

In some embodiments, the solid-liquid separation step includes filtering and freeze-drying the mixture added with the flocculating agent to obtain the precursor.

In some embodiments, the mass ratio of the silicon material to the flocculating agent is in a range of 1: (1 to 1.3), which specifically may be 1: 1, 1: 1.05, 1: 1.08, 1: 1.1, 1: 1.2, 1.25 or 1: 1.3, or the like, and may also be other values within the above range, which is not limited herein.

In some embodiments, the flocculating agent has a solid content ranging from 0.1% to 0.5%, which specifically may be 0.1%, 0.15%, 0.2%, 0.25%, 0.3%, 0.35%, 0.4%, 0.45% or 0.5%, or the like, and may also be other values within the above range, which is not limited herein.

In some embodiments, the flocculating agent includes a flocculating agent, and the flocculating agent includes at least one of an inorganic flocculating agent and an organic flocculating agent.

In some embodiments, the inorganic flocculating agent includes at least one of aluminum sulfate, aluminum chloride, ferric sulfate, and ferric chloride.

In some embodiments, the organic flocculating agent includes at least one of polyaluminum chloride, polyaluminum sulfate, and polypropylamide.

In the present disclosure, the flocculating agent is added to the mixture, so that the dispersed nanoscale silicon material can precipitate in a flocculated state. However, since the surface of the silicon material contains a dispersant, the silicon material in the flocculation product remains dispersed independently of each other.

In some embodiments, the freeze-drying temperature is in a range of -20 °C to - 30 °C, which specifically may be -20 °C, -22 °C, -24 °C, -25 °C, -27 °C, - 28 °C, -30 °C, or the like, which is not limited herein.

In some embodiments, the freeze-drying time is in a range of 10h to 24h, which specifically may be 10h, 12h, 15h, 18h, 20h, 22h or 24h, or the like, which is not limited herein. Through freeze-drying treatment, the nanoscale silicon material can be uniformly dispersed in the dispersant.

Step S20, the precursor and the carbon source precursor were mixed, and preheating treatment was performed to obtain a composite.

In some embodiments, the carbon source precursor includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, the mass ratio of the silicon material to the carbon source precursor is in a range of 100: (100 to 250), which specifically may be 100: 100, 100: 115, 100: 130, 100: 150, 100: 180, 100: 200, 100: 220, 100: 230, 100: 250, or the like, and may also be other values within the above range, which is not limited herein.

In some embodiments, the temperature of the preheating treatment is in a range of 150 °C to 350 °C, and the temperature may be 150 °C, 200 °C, 250 °C, 280 °C, 300 °C, 320 °C, 350 °C, or the like, which is not limited herein.

In some embodiments, the preheating treatment time is in a range of 2h to 15h, which specifically may be 2h, 3h, 5h, 8h, 10h, 12h or 15h, or the like, which is not limited herein.

In some embodiments, the preheating treatment is performed under stirring.

By controlling the preheating temperature, the preheating time and the preheating state, the dispersant reaches the boiling point to volatilize, and the carbon source precursor can sufficiently preheat, melt, soften and permeate and replace the dispersant located on the surface of the silicon material.

Step S30, carbonization treatment was performed on the composite to obtain the anode material.

In some embodiments, the temperature of the carbonization treatment is in a range of 700 °C to 1000 °C, and the temperature specifically may be 700 °C, 750 °C, 800 °C, 850 °C, 900 °C, 950 °C, 980 °C, or 1000 °C, or the like, and may also be other values within the above range, which is not limited herein.

In some embodiments, the carbonization treatment time is in a range of 1h to 10h, which specifically may be 1h, 2h, 3h, 4h, 5h, 6h, 8h, 9h or 10h, or the like, which is not limited herein.

In some embodiments, the carbonization treatment has a heating rate ranging from 2 °C/min to 10 °C/min, which specifically may be 2 °C/min, 4 °C/min, 5 °C/min, 6 °C/min, 8 °C/min, 9 °C/min or 10 °C/min, or the like, which is not limited herein.

In some embodiments, the carbonization treatment is performed under a protective gas.

In some embodiments, the carbonization treatment is performed under a protective gas, the protective gas includes at least one of nitrogen, helium, neon, argon, and krypton.

In some embodiments, the method further includes: the carbonized product is subjected to shaping treatment, screening and grading to obtain the anode material, and the shaping treatment includes at least one of crushing, grinding, ball milling and air crushing.

According to a third aspect, the present disclosure provides a battery, the battery includes the anode material according to the first aspect or the anode material prepared by the preparation method of the anode material according to the second aspect. The battery may be a lithium-ion battery, a sodium-ion battery, or the like.

The above are only preferred embodiments of the present disclosure and are not intended to limit the present disclosure, and it should be noted herein that any modifications, equivalent substitutions, improvements, and the like made within the spirit and principle of the present disclosure shall fall within the protection scope of the present disclosure.

### Example 1

The preparation method of the anode material of this Example includes the following steps.
(1) 1Kg silicon nano-particles was dispersed in an aqueous solution, then 500g of polyvinylpyrrolidone was added, stirred and dispersed for 1h, then 1Kg polyacrylamide solution with the solid content of 0.5% was added, stirred for 10 minutes and stood for 5min, the stood solution was centrifuged, and the centrifuged sample was freeze-dried at -30 °C for 24h to obtain a precursor.
(2) The precursor was placed in a VC mixing heater, an asphalt was added by the mass ratio of nano silicon to asphalt of 100: 120, the temperature of the equipment was raised to 300 °C under stirring, and the material was taken out after mixing for 2h to obtain a composite.
(3) The composite was placed in a box furnace, nitrogen was introduced and the temperature was raised to 800 °C at a heating rate of 3 °C/min, the temperature was maintained for 3h and then naturally cooled, and the product was crushed by a mechanical crusher and passed through a 325 mesh screen to obtain the anode material.

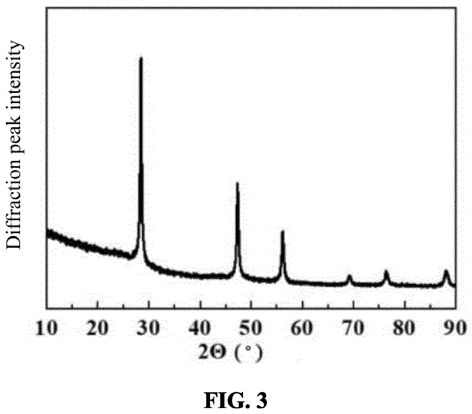

FIG. 2 is an electron mirror image of an anode material prepared in Example 1 of the present disclosure. FIG. 3 is an XRD schematic diagram of the anode material prepared in Example 1 of the present disclosure, as shown in FIG. 2 and FIG. 3, the anode material prepared in this Example of the present disclosure includes a carbon material and a silicon material, and the silicon material is located inside the carbon material and between the carbon material. The SEM section of a particle of the anode material prepared in Example 1 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, the range of d₀ for all 5 regions is between 5 to 50. 5 unit regions are randomly selected and the number N of particles of the silicon material in each selected unit region is counted, which are 20, 10, 13, 18, and 29, respectively.

### Example 2

(1) 1Kg silicon nano-particles was dispersed in an aqueous solution, then 500g of polyvinylpyrrolidone was added, stirred and dispersed for 1h, then 1Kg polyacrylamide solution with the solid content of 0.5% was added, stirred for 10 minutes and stood for 5min, the stood solution was centrifuged, and the centrifuged sample was freeze-dried at -30 °C for 24h to obtain a precursor.
(2) The precursor was placed in a VC mixing heater, an asphalt was added by the mass ratio of nano silicon to asphalt of 100: 140, the temperature of the equipment was raised to 300 °C under stirring, and the material was taken out after mixing for 2h to obtain a composite.
(3) The composite was placed in a box furnace, nitrogen was introduced and the temperature was raised to 800 °C at a heating rate of 3 °C/min, the temperature was maintained for 3h and then naturally cooled, and the product was crushed by a mechanical crusher and passed through a 325 mesh screen to obtain the anode material.

The anode material prepared in this Example of the present disclosure includes a carbon material and a silicon material, and the silicon material is located inside the carbon material and between the carbon material. The SEM section of a particle of the anode material prepared in Example 2 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, the range of d₀ for all 5 regions is between 5 to 50. 5 unit regions are randomly selected and the number N of particles of the silicon material in each selected unit region is counted, which are 12, 15, 23, 28 and 28, respectively.

### Example 3

It differs from Example 1 as follows.

(2) The precursor was placed in a VC mixing heater, an asphalt was added by the mass ratio of nano silicon to asphalt of 100: 180, the temperature of the equipment was raised to 300 °C under stirring, and the material was taken out after mixing for 2h to obtain a composite.

The anode material prepared in this Example of the present disclosure includes a carbon material and a silicon material, and the silicon material is located inside the carbon material and between the carbon material.

The anode material prepared by the Example of the present disclosure includes an active material, the active material includes a carbon substrate and a silicon material, the carbon matrix has pores, and at least part of the silicon material is distributed in the pores of the carbon substrate. The SEM section of a particle of the anode material prepared in Example 3 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, the range of d₀ for all 5 regions is between 5 to 50. 5 unit regions are randomly selected and the number N of particles of the silicon material in each selected unit region is counted, which are 12, 13, 21, 27 and 28, respectively.

### Example 4

### It differs from Example 1 as follows.

(2) The precursor was placed in a VC mixing heater, an asphalt was added by the mass ratio of nano silicon to asphalt of 100: 100, the temperature of the equipment was raised to 300 °C under stirring, and the material was taken out after mixing for 2h to obtain a composite. The SEM section of a particle of the anode material prepared in Example 4 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, the range of d₀ for all 5 regions is between 5 to 50. 5 unit regions are randomly selected and the number N of particles of the silicon material in each selected unit region is counted, which are 21, 23, 11, 27 and 28, respectively.

### Example 5

It differs from Example 1 as follows.

(2) The precursor was placed in a VC mixing heater, an asphalt was added by the mass ratio of nano silicon to asphalt of 100: 250, the temperature of the equipment was raised to 300 °C under stirring, and the material was taken out after mixing for 2h to obtain a composite. The SEM section of a particle of the anode material prepared in Example 5 is divided into a plurality of unit regions with an area of A × B, wherein A × B = 100 nm * 100 nm = 10⁴ nm² . 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, the range of d₀ for all 5 regions is between 5 to 50. 5 unit regions are randomly selected and the number N of particles of the silicon material in each selected unit region is counted, which are 20, 20, 13, 17 and 18, respectively.

### Example 6

It differs from Example 2 as follows.
(1) 1Kg silicon nano-particles was dispersed in a glycol solution, then 200g of polyvinylpyrrolidone was added, stirred and dispersed for 1h, then 1Kg polyacrylamide solution with the solid content of 0.5% was added, stirred for 10 minutes and stood for 5min, the stood solution was centrifuged, and the centrifuged sample was freeze-dried at -20 °C for 16h to obtain a precursor. The SEM section of a particle of the anode material prepared in Example 6 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, the range of d₀ for all 5 regions is between 5 to 50. 5 unit regions are randomly selected and the number N of particles of the silicon material in each selected unit region is counted, which are 30, 10, 13, 27 and 28, respectively.

### Example 7

It differs from Example 2 as follows.
(1) 1Kg silicon nano-particles was dispersed in an aqueous solution, then 800g of polyvinylpyrrolidone was added, stirred and dispersed for 1h, then 1Kg polyacrylamide solution with the solid content of 0.5% was added, stirred for 10 minutes and stood for 5min, the stood solution was centrifuged, and the centrifuged sample was freeze-dried at -20 °C for 24h to obtain a precursor. The SEM section of a particle of the anode material prepared in Example 7 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, the range of d₀ for all 5 regions is between 5 to 50. 5 unit regions are randomly selected and the number N of particles of the silicon material in each selected unit region is counted, which are 10, 20, 23, 17 and 26, respectively.

### Example 8

It differs from Example 2 as follows.
(1) 1Kg silicon nano-particles was dispersed in an aqueous solution, then 350g of polyacrylic acid was added, stirred and dispersed for 1h, then 1Kg polyacrylamide solution with the solid content of 0.5% was added, stirred for 10 minutes and stood for 5min, the stood solution was centrifuged, and the centrifuged sample was freeze-dried at -20 °C for 20h to obtain a precursor. The SEM section of a particle of the anode material prepared in Example 8 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, the range of d₀ for all 5 regions is between 5 to 50. 5 unit regions are randomly selected and the number N of particles of the silicon material in each selected unit region is counted, which are 25, 20, 23, 17 and 18, respectively.

### Example 9

It differs from Example 2 as follows.
(1) 1Kg silicon nano-particles was dispersed in an aqueous solution, then 600g of sodium stearate was added, stirred and dispersed for 1h, then 1Kg polyaluminum sulfate solution with the solid content of 0.2% was added, stirred for 10 minutes and stood for 5min, the stood solution was centrifuged, and the centrifuged sample was freeze-dried at 20 °C for 16h to obtain a precursor. The SEM section of a particle of the anode material prepared in Example 9 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, the range of d₀ for all 5 regions is between 5 to 50. 5 unit regions are randomly selected and the number N of particles of the silicon material in each selected unit region is counted, which are 20, 20, 23, 25 and 8, respectively.

### Example 10

It differs from Example 2 as follows.
(1) 1Kg silicon nano-particles was dispersed in an aqueous solution, then 200g of carboxymethyl cellulose was added, stirred and dispersed for 1h, then 1Kg ferric chloride solution with the solid content of 0.2% was added, stirred for 10 minutes and stood for 5min, the stood solution was centrifuged, and the centrifuged sample was freeze-dried at -30 °C for 24h to obtain a precursor. The SEM section of a particle of the anode material prepared in Example 10 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, the range of d₀ for all 5 regions is between 3 to 50. 5 unit regions are randomly selected and the number N of particles of the silicon material in each selected unit region is counted, which are 23, 10, 13, 27 and 28, respectively.

### Example 11

It differs from Example 2 as follows.
(1) 1Kg silicon nano-particles was dispersed in an aqueous solution, then 150g of carboxymethyl cellulose was added, stirred and dispersed for 1h, then 1Kg polyacrylamide solution with the solid content of 0.5% was added, stirred for 10 minutes and stood for 5min, the stood solution was centrifuged, and the centrifuged sample was freeze-dried at -20 °C for 16h to obtain a precursor. The SEM section of a particle of the anode material prepared in Example 11 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, the range of d₀ for all 5 regions is between 3 to 20. 5 unit regions are randomly selected and the number N of particles of the silicon material in each selected unit region is counted, which are 30, 1, 3, 27 and 31, respectively.

### Example 12

It differs from Example 2 as follows.
(1) 1Kg silicon nano-particles was dispersed in an aqueous solution, then 200g of carboxymethyl cellulose was added, stirred and dispersed for 1h, then 0.8Kg polyacrylamide solution with the solid content of 0.1% was added, stirred for 10 minutes and stood for 5min, the stood solution was centrifuged, and the centrifuged sample was freeze-dried at -20 °C for 16h to obtain a precursor. The SEM section of a particle of the anode material prepared in Example 12 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, the range of d₀ for all 5 regions is between 3 to 30. 5 unit regions are randomly selected and the number N of particles of the silicon material in each selected unit region is counted, which are 30, 10, 13, 30 and 28, respectively.

### Example 13

It differs from Example 1 as follows.
(1) 1Kg silicon nano-particles was dispersed in an aqueous solution, then 50g of polyvinylpyrrolidone was added, stirred and dispersed for 1h, then 1Kg polyacrylamide solution with the solid content of 0.5% was added, stirred for 10 minutes and stood for 5min, the stood solution was centrifuged, and the centrifuged sample was freeze-dried at -30 °C for 24h to obtain a precursor.

The SEM section of a particle of the anode material prepared in Example 13 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀, the range of d₀ for all 2 regions is between 3 to 20, and the range of d₀ for all 3 regions is less than 3. 5 unit regions are randomly selected and the number N of particles of the silicon material in each selected unit region is counted, which are 30, 30, 13, 27 and 28, respectively.

### Example 14

It differs from Example 2 as follows.
(1) 1Kg silicon nano-particles was dispersed in an aqueous solution, then 500g of polyvinylpyrrolidone was added, stirred and dispersed for 1h, then 1Kg polyacrylamide solution with the solid content of 0.1% was added, stirred for 10 minutes and stood for 5min, the stood solution was centrifuged, and the centrifuged sample was freeze-dried at -30 °C for 24h to obtain a precursor.

The SEM section of a particle of the anode material prepared in Example 14 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀, the range of d₀ for all 3 regions is between 3 to 20, and the range of d₀ for all 2 regions is less than 3. 5 unit regions are randomly selected and the number N of particles of the silicon material in each selected unit region is counted, which are 30, 10, 13, 27 and 28, respectively.

### Comparative Example 1

It differs from Example 1 as follows.
(1) 1Kg silicon nano-particles was dispersed in an aqueous solution, stirred and dispersed for 1h, then 1Kg polyacrylamide solution with the solid content of 0.5% was added, stirred for 10 minutes and stood for 5min, the stood solution was centrifuged, and the centrifuged sample was freeze-dried at -30 °C for 24h to obtain a precursor. The SEM section of a particle of the anode material prepared in Comparative Example 1 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, d₀ for all 5 regions is less than 3. 5 unit regions are randomly selected and the number N of particles of the silicon material in each selected unit region is counted, which are 32, 33, 0, 1 and 28, respectively.

### Comparative Example 2

It differs from Example 2 as follows.
(1) 1Kg silicon nano-particles was dispersed in an aqueous solution, then 500g of polyvinylpyrrolidone was added, stirred and dispersed for 1h, stood for 5min, the stood solution was centrifuged, and the centrifuged sample was freeze-dried at -30 °C for 24h to obtain a precursor. The SEM section of a particle of the anode material prepared in Comparative Example 2 is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 50 d₀ is calculated as d according to the scale converted into the actual spacing d₀ nm, d₀ for all 5 regions is less than 3. 5 unit regions are randomly selected and the number N of particles of the silicon material in each selected unit region is counted, which are 33, 35, 34, 0 and 0, respectively.

### Test Methods:

### (1) Specific Surface Area of the Anode Material Test Method

The specific surface area was measured using an American Micrometrics TriStar 3000 BET surface area and pore size analyzer.

### (2) Granularity of the Anode Material Test Method

The Malvern laser particle size analyzer MS3000 was used, based on the principle that the scattered light intensity distribution generated by particles in various directions depends on the size of the particles, large particles have small scattering angles, and small particles have large scattering angles. Therefore, the particle size distribution may be obtained by using the scattered light intensity distribution of laser diffraction. D50 was measured using a laser diffraction particle size analyzer, which exhibited a near-normal distribution. In the volume-based distribution, the cumulative diameter at 50% was D50, and similarly, the cumulative diameters at 90% and 10% were D90 and D10, respectively.

### (3) SEM of Anode Material Test Method

The surface morphology and particle size of samples were observed by a Hitachi S4800 scanning electron microscope.

The SEM section of a particle of the anode material is divided into a plurality of unit regions with an area of A × B, wherein A × B = 10⁴ nm². The distance of the centers of any two adjacent particles of the silicon material on the SEM sectional image is measured in any unit area, then the distance is converted into an actual distance d₀ nm according to the scale, and the average value is calculated as d. Specifically, the SEM section of a particle of the anode material is divided into a plurality of unit regions with an area of A × B, wherein A × B = 100 nm * 100 nm = 10⁴ nm². 5 unit regions are randomly selected in the SEM sectional image, the distance between the centers of two adjacent particles of the silicon material in 10 groups on the sectional image is randomly measured in each selected unit area, and then the average value of 100 d₀ is calculated as d according to the scale converted into the actual spacing d₀ nm.

The SEM section of a particle of the anode material is divided into a plurality of unit regions with an area of A × B, wherein A × B = 10⁴ nm², the number of particles of the silicon material in any one unit region is N. Specifically, the SEM section of a particle of the anode material is divided into a plurality of unit regions with an area of A × B, wherein A × B = 100 nm * 100 nm = 10⁴ nm² , 3 unit regions are randomly selected, and the number N of particles of the silicon material in each selected unit region is counted.

### (4) Particle Size of Silicon Material Test Method

Nano particles of the silicon material were observed using a field emission scanning electron microscope or a transmission electron microscope, and the particle sizes of 5 - 10 nano particles of the silicon material were directly measured using a scale, the mean value of the particle size was taken as the final particle size of the nano particles of the silicon material.

### (5) Mass Percentage of Silicon Element in the Anode Material Teat Method

A sample was dried overnight and placed in a corundum crucible, the crucible was placed in a 1200 °C muffle furnace (Nanyang Xinyu SA2-9-17TP) for 480 minutes to complete the combustion of carbon and the oxidation reaction of silicon or silicon oxide to silica; during the process, the weight of the crucible m₀, the weight of the sample m₁, the total weight of the crucible and product after burning m₂ were recorded, and the silicon content according to the following formula was calculated: Si% = (m₂ - m₀)/ m₁ × 28.09/ 60.09 × 100%.

### (6) the Mass Percentage of Carbon Element in the Anode Material Teat Method:

The German Bruker/German Elst infrared carbon sulfur analyzer G4 ICARUS HF/CS-i was used, the sample was burned in a high-temperature oxygen rich state, and the carbon elements contained in it were oxidized to carbon dioxide, which entered the infrared detector with the carrier gas. The content of carbon elements was calculated quantitatively by analyzing the changes in the infrared absorption wavelength intensity of the carbon dioxide signal.

### (7) Electrochemical Performance Test

The anode materials prepared in the Examples and the anode material, carboxymethyl cellulose, and styrene butadiene rubber were dissoved in N-methylpyrrolidone in a mass ratio of 80: 10: 10, the solid content was controlled to be 50%, coated on a copper foil current collector, and vacuum dried to prepare an anode material; a lithium plate was used as a positive electrode, 1mol/L lithium hexafluorophosphate LiPF 6/(ethylene carbonate EC + dimethyl carbonate DMC + ethyl methyl carbonate EMC) (v/v = 1: 1) electrolyte, a Celgard2400 separator, and a housing were assembled into a CR2016 button battery by a conventional production process, and an electrochemical performance test current density of 1C was equal to 1000 mA h/g. Under the condition of 0.1C, the capacity and the initial Coulomb efficiency were tested, under the condition of 1C, the capacity and the initial Coulomb efficiency were tested, and under the condition of 0.1C, the charging and discharging cycle retention rate and the electrode plate expansion were tested 50 times.

After the cycle was repeated for 50 times, a thickness H1 of the electrode plate of the lithium ion battery was measured by a micrometer, thus the expansion rate after 50 cycles = (H1-H0)/H0 × 100%.

After the cycle was repeated for 50 times, a discharge capacity was recorded as the remaining capacity of the lithium ion battery, and the capacity retention was calculated as the remaining capacity/the initial capacity × 100%.

### (8) The ratio of V_{C}/N_{Si} is calculated as follows.

V_{C} = mass of carbon element in the anode material/density of carbon material; V_{Si} = mass of silicon element in the anode material/density of silicon material; wherein the density of silicon material is 2.5g/cm³, and the density of carbon material is 1.8g/cm³.

Examples 1 to 12 of the present disclosure are represented by S1 to S12, Comparative Examples 1 to 2 are represented by D1 to D2, and the performance test results of the above samples are as follows.

**Table 1. The performance parameters of the anode material and battery thereof prepared in each Example and Comparative Example.**

| Sam ple | Mass Content of Element Si (%) | Mass Content of Element C (%) | V_{C} /V_{Si} | d₀ (nm) | d(n m) | N (particle s) | Specific Surface Area (m²/g) | First Reversible Capacity (mAh/g) | Initial Coulo mbic Efficiency (%) | 50 Cycle Expansi on Rate (%) | 50 Cycle Cap acity Retention Rate (%) |
|---|---|---|---|---|---|---|---|---|---|---|---|
| S1 | 54.4 | 42.3 | 1.08 | 5 to 50 | 14 | 20, 10, 13, 18, 29 | 3.5 | 2064.2 | 90.8 | 39 | 90.4 |
| S2 | 51.5 | 46.5 | 1.25 | 5 to 50 | 15 | 12, 15, 23, 28, 28 | 3.4 | 1970.3 | 90.4 | 37.6 | 91.6 |
| S3 | 45.3 | 51.7 | 1.59 | 5 to 50 | 18 | 12, 13, 21, 27, 28 | 3.8 | 1760.1 | 89.8 | 36.5 | 92.8 |
| S4 | 59.1 | 39 | 0.92 | 5 to 50 | 20 | 21, 23, 11, 27, 28 | 6.7 | 2225.1 | 89.3 | 42.6 | 90.2 |
| S5 | 37.3 | 61.1 | 2.28 | 5 to 50 | 21 | 20, 20, 13, 17, 18 | 3.2 | 1495.6 | 86.5 | 35.8 | 93.8 |
| S6 | 51.2 | 47.5 | 1.29 | 5 to 50 | 16 | 30, 10, 13, 27, 28 | 3.9 | 1962.0 | 90.2 | 40.1 | 89.6 |
| S7 | 51.6 | 46.9 | 1.26 | 5 to 50 | 45 | 10, 20, 23, 17, 26 | 5.8 | 1974.9 | 90.3 | 37.4 | 89.4 |
| S8 | 50.5 | 47.9 | 1.32 | 5 to 50 | 17 | 25, 20, 23, 17, 18 | 2.3 | 1937.8 | 90.1 | 37.8 | 91.4 |
| S9 | 50.9 | 47.1 | 1.29 | 5 to 50 | 30 | 20, 20, 23, 25, 8 | 3.1 | 1950.2 | 90.3 | 37.9 | 91.3 |
| S10 | 50.7 | 46.9 | 1.28 | 3 to 50 | 13 | 23, 10, 13, 27, 28 | 3.2 | 1942.5 | 90.2 | 37.4 | 91.2 |
| S11 | 50.4 | 47.2 | 1.30 | 3 to 20 | 5 | 30, 1, 3, 27, 31 | 2.9 | 1932.4 | 90.1 | 39.1 | 89.8 |
| S12 | 50.1 | 47.4 | 1.31 | 3 to 30 | 9 | 30, 10, 13, 30, 28 | 3.3 | 1922.1 | 89.8 | 38.8 | 90.0 |
| S13 | 54.9 | 42.6 | 1.08 | 3 to 20 <3 | 3 | 30, 30, 13, 27, 28 | 3.5 | 2064.2 | 90.8 | 49 | 81.4 |
| S14 | 51.5 | 46.5 | 1.25 | 3 to 20 <3 | 5 | 30, 30, 13, 27, 28 | 3.4 | 1970.3 | 90.4 | 47.6 | 81.6 |
| D1 | 55.2 | 42.8 | 1.08 | <3 | 1. 5 | 32, 33, 0, 1, 28 | 2.3 | 2094.2 | 90.4 | 48.3 | 82.5 |
| D2 | 50.6 | 48.1 | 1.32 | <3 | 2. 2 | 33, 35, 34, 0, 0 | 3.6 | 1941.9 | 90.3 | 42.4 | 85.8 |

It can be seen from the data in Table 1 that the average distance d between adjacent particles of the silicon material in any unit region in the anode materials prepared in Examples 1 to 14 satisfies 3 ≤ d ≤ 50. The silicon material in the anode material can be dispersed in the carbon material and between the carbon material, the conductivity of the anode material can be improved, the volume expansion effect of the silicon material can be effectively relieved in the cycle process, the structural stability of the anode material particles is maintained, and then the cycle performance of the anode material is improved.

According to the test data of Example 11 and Example 2 in Table 1, it can be seen that in the preparation process of the anode material of Example 11, the addition amount of the dispersant is less, the dispersion degree of the nano silicon is reduced, and the range of the distance between adjacent particles of the silicon material in any one unit region is reduced, that is, the distribution of the primary nanoparticles is relatively concentrated, and the number N of particles of the silicon material in at least one unit region N > 30, resulting in a slight decrease in the cycle and rate performance of the anode material.

According to the test data of Example 12 and Example 2 in Table 1, it can be seen that the addition amount of the flocculating agent in the preparation process of the anode material of Example 12 is small, the dispersed nanoscale silicon material may be partially agglomerated in the flocculation and precipitation process, and the particles of the silicon material in Example 12 and the particles of the silicon material in Example 2 are more agglomerated, resulting in a slight decrease in cycle and rate performance of the anode material.

According to the test data of Example 1 and Comparative Example 1 in Table 1, it can be seen that no dispersant is added to the anode material of Comparative Example 1 in the preparation process, the dispersion of the nano silicon material is poor, the average distance d between adjacent particles of the silicon material in any one unit region in the anode material does not satisfy 3 ≤ d ≤ 50, the number of particles of the silicon material in at least one unit region N > 30 and there are no particles of the silicon material in at least one unit region, the carbon material cannot uniformly coat the nano silicon material, and although the obtained anode material has a small difference in capacity, initial Coulomb efficiency and Example, the cycle and rate performance of the anode material are significantly reduced.

According to the test data of Example 1 and Comparative Example 2 in Table 1, it can be seen that no flocculating agent is added to the anode material of Comparative Example 2 in the preparation process, the dispersant cannot be uniformly coated and aggregated on the surfaces of the silicon material nanoparticles, resulting in serious agglomeration between the silicon material nanoparticles, the average distance d between adjacent particles of the silicon material in any unit region in the anode material does not satisfy 3 ≤ d ≤ 50, the number of particles of the silicon material in at least one unit region N > 30, there are no particles of the silicon material in at least one unit region, and the cycle performance and expansion performance of the carbon-coated anode material are poor.

The applicant states that the detailed equipment and flow of the process of the present disclosure are illustrated through the above Examples in the present disclosure, but the present disclosure is not limited to the above detailed process equipment and process flow, that is, it does not mean that the present disclosure must be implemented relying upon the detailed process equipment and process flow above. It will be apparent to those skilled in the art that any improvements made to the present disclosure, equivalent replacements to the raw materials of the products of the present disclosure and addition of adjuvant ingredients, and choices of the specific implementations, or the like, all fall within the protection scope and the disclosure scope of the present disclosure.

## Claims

1. An anode material, comprising a carbon material and a silicon material, wherein the silicon material is located inside the carbon material and/or between the carbon material; a total volume of the carbon material is V_{C}, and a total volume of the silicon material is V_{Si}, wherein 0.9 ≤ V_{C}/V_{Si} ≤ 2.3; and
a SEM section of a particle of the anode material is divided into a plurality of unit regions with an area of A × B, wherein A×B = 10⁴ nm², and an average distance between adjacent particles of the silicon material in any unit region is d nm, and 3 ≤ d ≤ 50.

2. The anode material according to claim 1, wherein a distance between adjacent particles of the silicon material in at least one unit region is d₀ nm, and 3 ≤ d₀ ≤ 50.

3. An anode material, comprising a carbon material and a silicon material, wherein the silicon material is located inside the carbon material and/or between the carbon material; a total volume of the carbon material is V_{C}, and a total volume of the silicon material is V_{Si}, wherein 0.9 ≤ V_{C}/V_{Si} ≤ 2.3; and
a SEM section of a particle of the anode material is divided into a plurality of unit regions with an area of A × B, wherein A × B = 10⁴ nm², and a number of particles of the silicon material in any one unit region is N, and 1 ≤ N ≤ 30.

4. The anode material according to any one of claims 1-3, wherein the silicon material comprises at least one of crystalline silicon, amorphous silicon, and a silicon alloy.

5. The anode material according to any one of claims 1-4, wherein the silicon material has a mean particle size of 1 nm to 50 nm.

6. The anode material according to any one of claims 1-5, wherein the silicon material comprises silicon particles.

7. The anode material according to claim 6, wherein the anode material further comprises a silicon oxide layer on a surface of the silicon particles.

8. The anode material according to claim 7, wherein a mass percentage of oxygen element in the silicon material is 1% to 18% based on a mass of the silicon material being 100%.

9. The anode material according to any one of claims 1-8, wherein the carbon material comprises at least one of amorphous carbon, crystalline carbon, graphite fibers, carbon nanotubes, carbon fibers, and mesocarbon microspheres.

10. The anode material according to any one of claims 1-9, wherein the carbon material has pores, and at least part of the silicon material is located in pores of the carbon material.

11. The anode material according to any one of claims 1-10, wherein a median particle size of the anode material is 5 µm to 15 µm.

12. The anode material according to any one of claims 1-11, wherein a specific surface area of the anode material is 1 m²/g to 20 m²/g.

13. The anode material according to any one of claims 1-12, wherein a mass percentage of carbon element in the anode material is 30% to 75%.

14. The anode material according to any one of claims 1-13, wherein a mass percentage of silicon element in the anode material is 25% to 65%.

15. A battery, comprising the anode material according to any one of claims 1-14.
